# EUROPÄISCHE PATENTANMELDUNG

(11) **EP 3 950 399 A1**
(43) Veröffentlichungstag der Anmeldung: **09.02.2022**
(21) Anmeldenummer: 21190163.2
(22) Anmeldetag: 06.08.2021
(51) Int. Cl.: B60K 35/00, G02B 27/01, G02B 27/00

(54) **KOMPAKTES UND ROBUSTES HEAD-UP-DISPLAY**

(30) Priorität: 07.08.2020 DE 102020210074
(71) Anmelder: Continental Engineering Services GmbH, 60489 Frankfurt (DE)
(72) Erfinder: Bernitt, Andreas, 60488 Frankfurt am Main (DE); Trapp, Christian, 60488 Frankfurt am Main (DE); De Pizzol, Christian, 60488 Frankfurt am Main (DE); Strobl, Stefan, 60488 Frankfurt am Main (DE); Haring-Aue, Nicole, 60488 Frankfurt am Main (DE)
(74) Vertreter: Continental Corporation

(57) **Zusammenfassung**

Head-up-Display für ein Kraftfahrzeug, welches eine Anzeigeeinheit (8-16) aufweist, mittels deren Bildpunkte ein Bild erzeugbar ist, welches über mindestens eine Spiegeleinheit (2, 18) reflektiert wird, wobei das Head-up-Display eine elektronische Steuereinheit (26) aufweist, mittels welcher zumindest die Bildpunkte (30) der Anzeigeeinheit (15) angesteuert werden,
dadurch gekennzeichnet, dass
die elektronische Steuereinheit (26) so ausgebildet ist und die Bildpunkte (30), welche das Bild erzeugen können, so angesteuert werden, dass das Bild hinsichtlich der dieses Bild erzeugenden Bildpunkte entlang einer definierten Achse (31) verschoben werden kann und/oder verschoben wird.

## Beschreibung

Die Erfindung betrifft ein Head-up-Display gemäß Oberbegriff von Anspruch 1.

Der Erfindung liegt die Aufgabe zu Grunde ein Head-up-Display vorzuschlagen, welches besonders robust und/oder kompakt und/oder kostengünstig ist.

Diese Aufgabe wird erfindungsgemäß gelöst durch das Head-up-Display gemäß Anspruch 1.

Unter einem Head-up-Display wird bevorzugt ein Anzeigesystem verstanden, bei welcher mittels einer Spiegeleinheit die Bildpunkte bzw. das Bild einer Anzeigeeinheit auf einer Projektionsfläche bereitgestellt werden kann, insbesondere dient die Frontscheibe eines Fahrzeugs dabei als Projektionsfläche oder alternativ eine zusätzliche Projektionsfläche des Anzeigesystems selbst. Das Anzeigesystem ist dabei besonders bevorzugt so ausgelegt, dass es einen Fahrer eines Fahrzeugs mit Daten des Fahrzeugs und/oder Informationen optisch versorgt. Besonders bevorzugt wird unter einem Fahrzeug ein Kraftfahrzeug oder ein Luftfahrzeug verstanden.

Vorzugsweise ist das Head-up-Display so ausgebildet, dass zur Erzeugung des Bildes nicht sämtliche Bildpunkte der Anzeigeeinheit genutzt werden.

Es ist bevorzugt, dass eine definierte Anzahl an benachbarten Bildzeilen zur Erzeugung des Bildes nicht genutzt werden, wobei diese Bildzeilen an einem oder beiden Rändern oder allen vier Rändern der Anzeigeeinheit angeordnet sind.

Die Anzeigeeinheit weist vorzugsweise ein Display bzw. eine Anzeigefläche auf, welche die Bildpunkte umfasst. Die Bildpunkte sind zweckmäßigerweise in Bildzeilen angeordnet,

Es ist zweckmäßig, dass das Bild der Anzeigeeinheit hinsichtlich dieses Bildes erzeugenden Bildpunkte verschoben wird/ werden kann, das Head-up-Display keine Mittel zur Verstellung der Spiegeleinheit aufweist und dass das Head-up-Display dadurch besonders kompakt ausgebildet werden kann.

Es ist bevorzugt, dass die elektronische Steuereinheit so ausgebildet ist, dass die Bildpunkte, welche das Bild erzeugen, so angesteuert werden, dass das Bild hinsichtlich der dieses Bild erzeugenden Bildpunkte entlang bzw. orthogonal einer definierten Achse verschoben wird.

Es ist bevorzugt, dass zur Erzeugung des Bildes nicht sämtliche Bildpunkte der Anzeigeeinheit genutzt werden, insbesondere dass Bildzeilen senkrecht zur definierten Achse nicht dazu genutzt werden, insbesondere an einem oder beiden Rändern der Anzeigeeinheit, hinsichtlich der definierten Achse.

Vorzugsweise ist das Head-up-Display so ausgebildet, dass durch eine externe Eingabe, insbesondere durch einen Fahrer des Kraftfahrzeugs, die Verschiebung des Bildes hinsichtlich der dieses Bild erzeugenden Bildpunkte entlang der definierten Achse festgelegt und/oder verändert und/oder durchgeführt wird, besonders bevorzugt wird eine Verschiebung nach oben oder nach unten ermöglicht, so dass dem Fahrer eine möglichst optimale erfassbare Projektion des Bildes auf der Windschutzscheibe ermöglicht wird, durch seine externe Eingabe.

Es ist bevorzugt, dass die definierte Anzahl an Bildzeilen, die zur Erzeugung des Bildes nicht genutzt werden, senkrecht zur definierten Achse ausgerichtet sind.

Das Head-up-Display ist vorzugsweise so ausgebildet, dass die elektronische Steuereinheit so ausgebildet ist, dass sie nach dem Verschieben der Bildpunkte entlang der definierten Achse bzw. orthogonal zur definierten Achse, eine definierte Anzahl an Bildzeilen, welche bis dahin nicht zur Erzeugung des Bildes genutzt werden, dann zur Erzeugung des Bildes benutzt. In diesem Fall bzw. nach der Verschiebung werden dann andere Bildpunkte zur Erzeugung des Bildes nicht genutzt.

Es ist zweckmäßig, dass die Spiegeleinheit nicht translatorisch oder rotatorisch auslenkbar ist durch die elektronische Steuereinheit. Insbesondere weist das Head-up-Display keine Spiegeleinheit auf, die bewegliche bzw. im Betrieb bewegliche, Spiegelelemente umfasst.

Bevorzugt umfasst die Anzeigeeinheit ein Wärmeableitungsmittel und/oder eine Leiterplatte mit der Displaybeleuchtung, beispielhaft mit LEDs bestückt, insbesondere eine Steckereinheit und/oder Wabenreflektoren, welche so ausgebildet sind, das Licht der LEDs auszurichten, sowie insbesondere ein Polarisationselement für das Licht der LEDs. Außerdem umfasst die Anzeigeeinheit zweckmäßigerweise einen ersten Gehäuseteil der Anzeigeeinheit, welches an den Innenflächen zur Lichtreflexion verspiegelt ist sowie insbesondere eine optische Platte, welche das Licht in einen definierten Raumwinkel bereitstellt, und beispielhaft als Streufolie ausgebildet ist sowie das Display bzw. die Anzeigefläche, welche die Bildpunkte aufweist und besonders bevorzugt einen zweiten Gehäuseteil.

Vorzugsweise weist das Head-up-Display mehrere Gehäuseteile auf, insbesondere ein erstes und ein zweites Gehäuseteil, welche ein unteres Gehäusesegment bilden und zweckmäßigerweise weist das Head-up-Display ein drittes Gehäuseteil als ein oberes Gehäusesegment auf. Auf dem dritten Gehäuseteil sind besonders bevorzugt drei optisch durchlässige Folien, welche insbesondere zusammen eine laminierte gemeinsame Folie bilden, ausgebracht und angeordnet.

Es ist bevorzugt, dass das Head-up-Display als Anordnung ausgebildet ist, welche eine Kamera umfasst, welche einen Augenbereich eines Fahrers erfasst, wobei die Augen ein auf eine Scheibe projiziertes Bild erfassen, wobei die elektronische Steuereinheit des Head-up-Displays oder eine externe elektronische Steuereinheit, insbesondere selbstständig bzw. ohne Eingabe des Fahrers, in Abhängigkeit der Ausrichtung des durch die Kamera erfassten Augenbereichs in Relation zu dem projizierten Bild die Verschiebung des durch die Anzeigeeinheit erzeugen Bildes hinsichtlich der dieses Bild erzeugenden Bildpunkte entlang der definierten Achse verschiebt, insbesondere nach oben oder nach unten. Der Augenbereich ist dabei zweckmäßigerweise eine Zone um beide Augen herum.

Vorzugsweise ist das Head-Up-Display so ausgebildet und wird verwendet, um dem Fahrer Informationen zum Fahrzeugzustand, der Umgebung, oder andere Informationen in die Windschutzscheibe einzuspiegeln. Auch Informationen für andere Insassen des Fahrzeugs können mittels des Head-Up-Displays angezeigt werden.

Zweckmäßigerweise erfolgt die Verschiebung der Bildpunkte, welche das Bild erzeugen können, durch eine Software, welche auf der elektronischen Steuereinheit läuft.

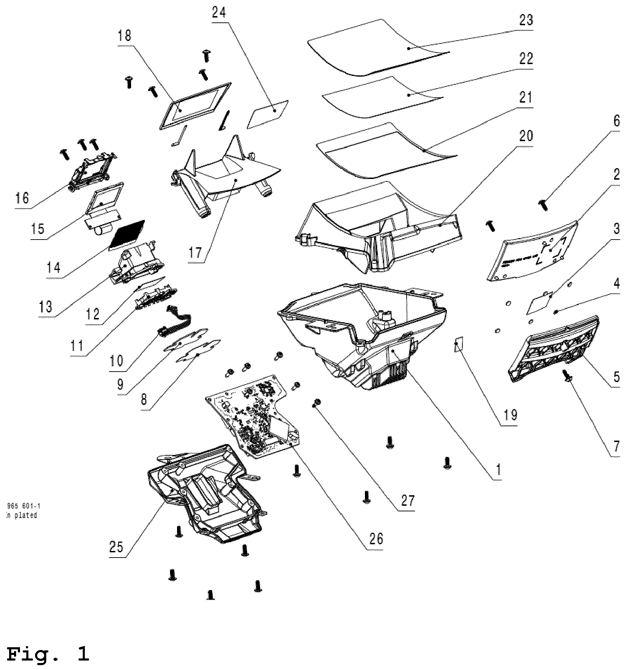

Anhand der Fig.1 ist beispielhaft in schematischer Weise ein Head-up-Display anhand einer Explosionszeichnung veranschaulicht.

Das Head-up-Display ist beispielhaft für ein Kraftfahrzeug ausgebildet und weist eine Anzeigeeinheit 8-16 auf, mittels deren Bildpunkten ein Bild erzeugbar ist, welches über eine Spiegeleinheit 2-7 reflektiert wird. Spiegeleinheit 2-7 weist dabei ein asphärisches Spiegelelement 2 und einen asphärischen Spiegelhalter auf. Das Head-up-Display weist außerdem eine elektronische Steuereinheit 26 auf, mittels welcher zumindest die Bildpunkte der Anzeigeeinheit angesteuert werden.

Die elektronische Steuereinheit 26 ist dabei so ausgebildet und die Bildpunkte 30 des Displays 15, welche das Bild erzeugen können, werden durch die elektronische Steuereinheit 26 so angesteuert, dass das Bild hinsichtlich der dieses Bild erzeugenden Bildpunkte entlang einer definierten Achse verschoben wird, wodurch die Spiegeleinheit 2-7 nicht translatorisch oder rotatorisch auslenkbar ausgebildet ist. Beispielgemäß sind das asphärische Spiegelelement 2 und das planare Spiegelelement 18 jeweils so ausgebildet und dimensioniert, dass sie von der Bildfläche das unverschobene sowie das verschobene Bild spiegeln können, wobei die jeweilige Spiegelfläche größer ist als die maximale Bildfläche eines Bildes, welches verschoben werden kann.

Die Anzeigeeinheit 16 umfasst beispielhaft ein Wärmeableitungsmittel 8, eine Leiterplatte 9 mit der Displaybeleuchtung, beispielhaft mit LEDs bestückt, eine Steckereinheit 10, Wabenreflektoren 11, welche so ausgebildet sind, das Licht der LEDs auszurichten, ein Polarisationselement 12 für das Licht der LEDs 9, ein erster Gehäuseteil der Anzeigeeinheit 13, welches an den Innenflächen zur Lichtreflexion verspiegelt ist, eine optische Platte 14, welche das Licht in einen definierten Raumwinkel bereitstellt, und beispielhaft als Streufolie ausgebildet ist sowie Display bzw. Anzeigefläche 15, welche die Bildpunkte aufweist und einen zweiten Gehäuseteil 16.

Gehäuseteile 1, 20 und 25 des gesamten Head-up-Displays bilden erstes und zweites Gehäuseteil 1 und 25 ein unteres Gehäusesegment bilden und drittes Gehäuseteil 20 ein oberes Gehäusesegment. Auf drittes Gehäuseteil 20 sind drei optisch durchlässige Folien 21, 22 und 23, welche zusammen eine laminierte gemeinsame Folie bilden, ausgebracht und angeordnet.

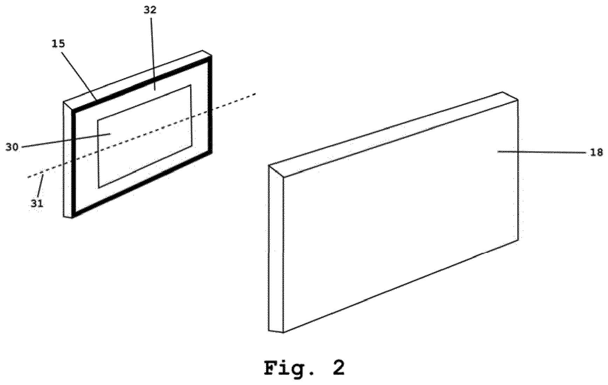

Fig. 2 zeigt ein beispielhaftes Display bzw. Anzeigefläche 15 sowie ein beispielgemäßes planares Spiegelelement 18 in schematischer Darstellung. Die Bildpunkte 30, welche das Bild vor der Verschiebung erzeugen, sind umrahmt von einer definierten Anzahl an benachbarten Bildzeilen, welche zur Erzeugung des Bildes vor der Verschiebung nicht genutzt werden, wobei diese Bildzeilen an allen vier Rändern der Anzeigefläche angeordnet sind 32. Die hier nicht dargestellte elektronische Steuereinheit steuert die Anzeigefläche 15 dann so an, dass das Bild hinsichtlich der dieses Bild erzeugenden Bildpunkte entlang der definierten Achse 31, also beispielsweise nach recht verschoben wird. Das jeweils durch die Bildpunkte erzeugte Bild wird durch planares Spiegelelement 18 reflektiert.

### Bezugszeichen

- 1: erstes Gehäuseteil des gesamten Head-up-Displays
- 2-7: den asphärischen Spiegel und den asphärischen Spiegelhalter, welche die Spiegeleinheit bilden, dabei
- 2: asphärisches Spiegelelement

- 8-16: Anzeigeeinheit, dabei
- 8: ein Wärmeableitungsmittel
- 9: LEDs bzw. Leuchtdioden bzw. Leiterplatte mit LEDs bestückt
- 10: Steckereinheit
- 11: Wabenreflektoren
- 12: Polarisationselement
- 13: erster Gehäuseteil der Anzeigeeinheit
- 14: optische Platte
- 15: Display bzw. Anzeigefläche
- 16: zweiter Gehäuseteil der Anzeigeeinheit

- 17: innere Blende
- 18: eine weitere Spiegeleinheit, planare Spiegelelement
- 19: erste Beschriftung
- 20: drittes Gehäuseteil des gesamten Head-up-Displays

- 21-23: Abdeckglaseinheit bzw. drei optisch durchlässige Folien
- 24: zweite Beschriftung
- 25: zweites Gehäuseteil des gesamten Head-up-Displays
- 26: die elektronische Steuereinheit
- 27: die Befestigung der elektronischen Steuereinheit
- 30: Bildpunkte der Anzeigefläche, welche das Bild erzeugen, beispielsweise vor der Verschiebung
- 31: definierte Achse
- 32: definierte Anzahl an Bildzeilen der Anzeigefläche, die nicht genutzt werden, beispielsweise vor der Verschiebung

## Patentansprüche

1. Head-up-Display für ein Kraftfahrzeug, welches eine Anzeigeeinheit (8-16) aufweist, mittels deren Bildpunkte (30) ein Bild erzeugbar ist, welches über mindestens eine Spiegeleinheit (2, 18) reflektiert wird, wobei das Head-up-Display eine elektronische Steuereinheit (26) aufweist, mittels welcher zumindest die Bildpunkte (30) der Anzeigeeinheit (15) angesteuert werden,
**dadurch gekennzeichnet, dass**
die elektronische Steuereinheit (26) so ausgebildet ist und die Bildpunkte (30), welche das Bild erzeugen können, so angesteuert werden, dass das Bild hinsichtlich der dieses Bild erzeugenden Bildpunkte (30) entlang einer definierten Achse (31) verschoben werden kann und/oder verschoben wird.

2. Head-up-Display gemäß Anspruch 1, **dadurch gekennzeichnet, dass** zur Erzeugung des Bildes nicht sämtliche Bildpunkte (32) der Anzeigeeinheit (15) genutzt werden.

3. Head-up-Display gemäß Anspruch 1 oder 2, **dadurch gekennzeichnet, dass** eine definierte Anzahl (32) an benachbarten Bildzeilen zur Erzeugung des Bildes nicht genutzt werden, wobei diese Bildzeilen an einem oder beiden Rändern der Anzeigeeinheit (15) angeordnet sind.

4. Head-up-Display gemäß einem der vorhergehenden Ansprüche, **dadurch gekennzeichnet, dass** die definierte Anzahl (32) an Bildzeilen, die zur Erzeugung des Bildes nicht genutzt werden, senkrecht zur definierten Achse (31) ausgerichtet.

5. Head-up-Display gemäß einem der vorhergehenden Ansprüche, **dadurch gekennzeichnet, dass** die elektronische Steuereinheit (26) so ausgebildet ist, dass sie nach dem Verschieben der Bildpunkte entlang der definierten Achse (31), eine definierte Anzahl an Bildzeilen, welche bis dahin nicht zur Erzeugung des Bildes genutzt werden (32), dann zur Erzeugung des Bildes benutzt.

6. Head-up-Display gemäß einem der vorhergehenden Ansprüche, **dadurch gekennzeichnet, dass**
dieses so ausgebildet ist, dass durch eine externe Eingabe, insbesondere durch einen Fahrer des Kraftfahrzeugs, die Verschiebung des Bildes hinsichtlich der dieses Bild erzeugenden Bildpunkte (30) entlang der definierten Achse (31) festgelegt und/oder verändert wird.

7. Head-up-Display gemäß einem der vorhergehenden Ansprüche, **dadurch gekennzeichnet, dass** die Spiegeleinheit (2, 18) nicht translatorisch oder rotatorisch auslenkbar ist durch die elektronische Steuereinheit (26).

8. Head-up-Display gemäß einem der vorhergehenden Ansprüche, **dadurch gekennzeichnet, dass** das Head-up-Display als Anordnung ausgebildet ist, welche eine Kamera umfasst, die einen Augenbereich eines Fahrers erfasst, wobei die Augen ein auf eine Scheibe projiziertes Bild erfassen können, wobei die elektronische Steuereinheit (26) des Head-up-Displays oder eine externe elektronische Steuereinheit in Abhängigkeit der Ausrichtung des durch die Kamera erfassten Augenbereichs in Relation zu dem projizierten Bild die Verschiebung des durch die Anzeigeeinheit (8-16) erzeugen Bildes hinsichtlich der dieses Bild erzeugenden Bildpunkte (30) entlang der definierten Achse (31) verschiebt, insbesondere nach oben oder nach unten.
